# EUROPÄISCHE PATENTSCHRIFT

(11) **EP 3 385 550 B1**
(45) Veröffentlichungstag und Bekanntmachung des Hinweises auf die Patenterteilung: **04.01.2023**
(21) Anmeldenummer: 18020131.1
(22) Anmeldetag: 03.04.2018
(51) Int. Cl.: F16B 17/00, F16B 25/00, E04F 11/18

(54) **VERFAHREN ZUM VERBINDEN VON FLÄCHIGEN, METALLISCHEN WERKSTÜCKEN UND EINE ANWENDUNG DES VERFAHRENS**
METHOD FOR CONNECTING FLAT, METALLIC WORKPIECES AND AN APPLICATION OF SAID METHOD
PROCÉDÉ DE RACCORDEMENT DE PIÈCES MÉTALLIQUES PLATES ET APPLICATION DUDIT PROCÉDÉ

(30) Priorität: 04.04.2017 CH 4532017
(43) Veröffentlichungstag der Anmeldung: 10.10.2018
(73) Patentinhaber: Ruch Innovations AG, 6460 Altdorf (CH)
(72) Erfinder: Ruch, Andreas, 6460 Altdorf (CH)

(56) Entgegenhaltungen:
- EP-A1- 1 279 838
- EP-A2- 1 471 206
- WO-A2-2009/150624

## Beschreibung

Die vorliegende Erfindung betrifft ein Verfahren zum Verbinden von flächigen, metallischen Werkstücken für Konstruktionen im Metall- und Geländerbau nach dem Oberbegriff von Anspruch 1 sowie eine Anwendung des Verfahrens.

Die Auswahl an Geländern wie beispielsweise schlichten Staketengeländern, eleganten Brüstungen mit Glas- oder Lochblechfüllung, horizontal oder schräg, gebogen oder gerade lässt kaum Wünsche offen. Formschön und langlebig setzen sie Akzente und verleihen einem Alt- und Neubau ein individuelles Erscheinungsbild. Solche Geländer verbinden Funktionalität mit Eleganz, wobei der Aspekt der Qualität und Sicherheit stets an erster Stelle steht.

Es ist bekannt, Profile und Rohre bzw. Rohrenden auf verschiedenste Art und Weise miteinander zu verbinden. Insbesondere im Stahl- und Geländerbau ist es üblich, die jeweils zu verbindenden Elemente entweder an ihren Enden miteinander zu verschweißen, so dass die Rohre in einer bestimmten Winkellage zueinander fixiert sind. Es ist auch bekannt, dass die Rohrenden bei einer 90°-Winkellage zueinander auf Verbindungselemente geschoben oder geschraubt werden, so dass im Verbindungsbereich die Rohrenden an das Verbindungselement angrenzen.

Geländer bestehen üblicherweise aus mehreren beabstandet zueinander angeordneten Geländerpfosten, die durch einen Handlauf miteinander verbunden sind. Zusätzlich sind in der Regel noch mehrere parallel zueinander und zum Handlauf angeordnete Gurte vorhanden. Es sind eine Vielzahl von Geländerpfosten bekannt, die zusammen mit Handläufen zu einem Treppengeländer und Brüstungsgeländer zusammengesetzt werden können. Die Montage solcher Geländer soll nur von qualifizierten Personen, nicht aber durch angelerntes Personal vorgenommen werden und erfordert eine Vielzahl teurer Werkzeuge, wie Bohrmaschine, Schweißgerät und Bandschleifmaschine.

Bekannt sind auch Aluminiumgeländer mit dem Vorteil, dass diese nie rosten und deutlich leichter zum Montieren sind.

Die Patentschrift DE10200400156A1 beschreibt einen Geländerpfosten, der ohne Nachteil an der Baustelle in den verschiedensten Situationen eingebaut werden kann und vor Ort nicht mehr nachbearbeitet werden muss. Der Geländerpfosten weist Verbindungselemente mit mehreren Befestigungsbohrungen und Befestigungselementen für einen Handlauf auf, der jeweils vor Ort montiert werden kann. Diese Methode erlaubt zwar das Anpassen an verschiedene Geländerhöhen und Varianten, bedingt aber einen Mehraufwand für die fachtechnische Montage vor Ort.

Die Europäischen Patenschrift EP 1 279 838 A1 betrifft ein Verfahren zur Herstellung einer unlösbaren Verbindung zweier Werkstücke entlang eines gemeinsamen, flächigen Bereiches. Im flächigen Bereich sind Lochungen vorgesehen, in welche bolzenartige Elemente mit ihrem einen Ende eingeführt und fest angeordnet werden. Anschliessend wird das andere Teil mit im anderen flächigen Bereich angeordneten Bohrungen über die anderen Enden der bolzenartigen Elemente aufgesetzt und die beiden flächigen Bereiche aneinandergefügt. Schliesslich wird über weitere Bohrungen ein härtender Klebestoff injiziert, um eine feste Verbindung zu gewährleisten. Dieses Verfahren eignet sich insbesondere für das geleimte und unlösbare Verbinden von zwei Holzstücken. Die Verbindung erhält ihre Festigkeit nach dem Aushärten des flüssigen Klebstoffes. Dieses Verfahren ist aufwändig da zusätzliche Lochungen notwendig sind und ein zusätzlicher apparativer Aufwand für die Zuführung des flüssigen Klebstoffes erforderlich ist. Der Zeitbedarf für das Aushärten des Klebstoffes wirkt sich negativ auf die Durchlaufzeit im technischen Herstellungsprozess aus.

Ähnliche Verfahren sind zudem aus WO 2009/150624 A2 oder EP 1 471 206 A2 bekannt.

Als Werkstoff für Staketengeländer wird hauptsächlich Stahl oder CNS verwendet, wobei die Konstruktionselemente aus Stahl mittels aufwändiger Feuerverzinkung vor Korrosion und Rost geschützt und mittels Schweissen miteinander verbunden werden. Nachteilig bei heutigen Verfahren ist einerseits der grosse Aufwand für den gesamten Verarbeitungsprozess von der Fertigung bis zum Aufbringen des Korrosionsschutzes und anderseits, um die gewünschte Qualität der geschweissten oder verschraubten Elemente mit vernünftigem technischem Aufwand sicherstellen zu können, sowie die verlängerte Fertigungszeit.

Der vorliegenden Erfindung liegt daher die Aufgabe zu Grunde, ein Verfahren anzugeben, bei dem die vorstehend genannten Nachteile eliminiert werden.

Diese Aufgabe wird durch die in Anspruch 1 angegebenen Merkmale gelöst. Vorteilhafte Ausführungsvarianten sind in den abhängigen Ansprüchen angegeben.

Die hier vorgestellte Erfindung ermöglicht einerseits die effiziente und prozesssichere Herstellung von Geländern, insbesondere von nicht-rostenden, vorgefertigten und einfach zu montierenden Staketengeländern aus Aluminium, und erlaubt anderseits eine einfachere Montage vor Ort wegen des geringeren Stückgewichtes. Dies wird erfindungsgemäss durch das Verfahren nach Anspruch 1 erreicht. Durch das Verfahren wird erreicht, dass
- mittels eines Verbindungselementes eine gesteckte und verpresste und verschraubte und unlösbare Verbindung zwischen zwei flächigen Aluminium-Bauteilen resultiert,
- die Verbindung keine Schweissnähte aufweist, und
- das Verbindungselement die Kombination eines gewindefurchenden Teils mit einem Rückhaltemechanismus aufweist.

Insgesamt ergibt sich mit dem vorgestellten erfindungsgemässen Verfahren infolge des effizienteren Verarbeitungsprozesses ohne aufwändige Korrosionsschutzbehandlung eine bessere Produktivität, eine höhere Standardisierung im Fertigungsprozess, eine bessere Qualität und ein optisch besseres Erscheinungsbild der Endprodukte im Vergleich zu anderen bekannten Verfahren. Insbesondere wird ein «Ausreissen» des Verbindungselementes aus den Bauteilen stark reduziert, die Verbindung benötigt keinen Klebstoff, die Festigkeit wird unmittelbar nach dem Zusammenpressen erreicht, die Verbindung ist nicht-rostend und die Verbindung zwischen zwei Aluminium Bauteilen ist unsichtbar.

Die vorliegende Erfindung wird im Folgenden anhand von Ausführungsbeispielen unter Bezugnahme auf Zeichnungen weiter erläutert. Dabei zeigen:
- Fig. 1: eine erste schematische Darstellung eines erfinderischen Verbindungselementes im Längsschnitt,
- Fig. 2: eine schematische Darstellung mit zwei Bauteilen und
- Fig. 3: eine zweite schematische Darstellung eines erfinderischen Verbindungselementes im Längsschnitt.

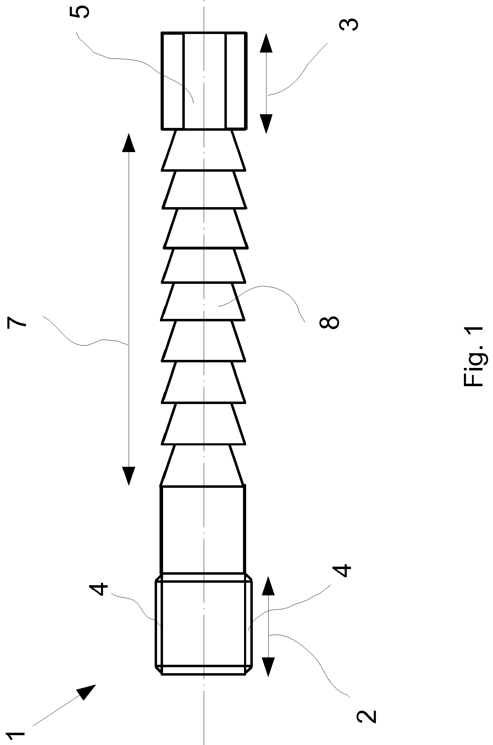

Fig. 1 zeigt im Längsschnitt ein beim erfinderischen Verfahren beschriebenes Verbindungselement 1, das ein gewindefurchendes Element mit einem «Widerhaken»-Element kombiniert und ein erstes Ende 2 und ein zweites Ende 3 aufweist. Das zweite Ende 3 ist als Sechkantschraubenkopf 5 ausgestaltet, um das Eindrehen des Verbindungselementes 1 in ein Sackloch eines Bauteiles zu ermöglichen. Das erste Ende 2 ist mit dem gewindefurchenden Teil 4 gemäss DIN 7500 versehen. Mittels eines geeigneten Werkzeuges, beispielsweise aber nicht ausschliesslich einem 6-Kant-Schraubenzieher, und dem Beaufschlagen mit einem Drehmoment wird das Verbindungselement 1 beim erfinderischen Verfahren in ein Sackloch eines ersten flächigen Bauteiles eingeschraubt. In einem weiteren Bearbeitungsschritt wird das Verbindungselement 1 mit dem zweiten Ende 3 in ein zweites flächiges Bauteil eingepresst.

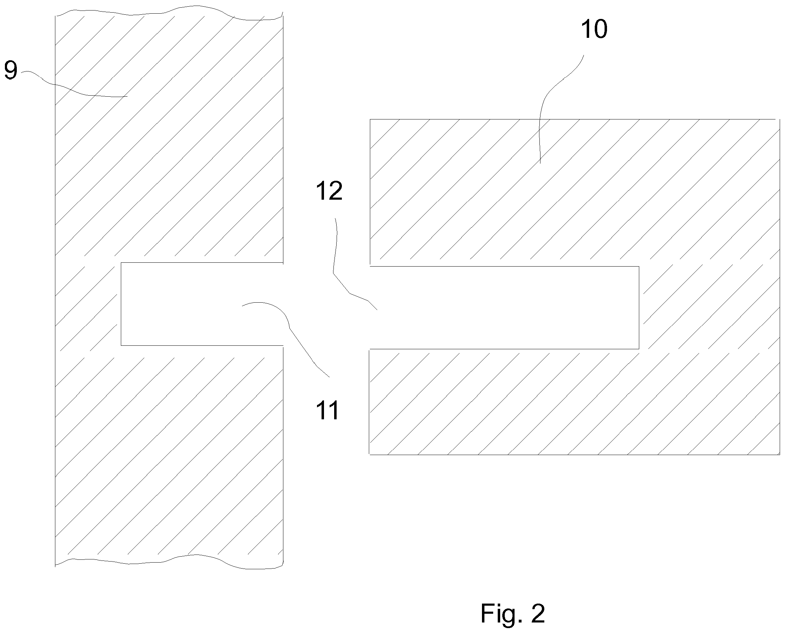

Die Fig. 2 zeigt zwei Bauteile 9,10 die beim erfinderischen Verfahren unlösbar miteinander verbunden werden. Das erste Bauteil 9 enthält eine erste Bohrung 11, die als Sackloch mit einem Grundloch im Bauteil 9 ausgestaltet ist. Das zweite Bauteil 10 ist mit einer zweiten Bohrung 12 versehen.

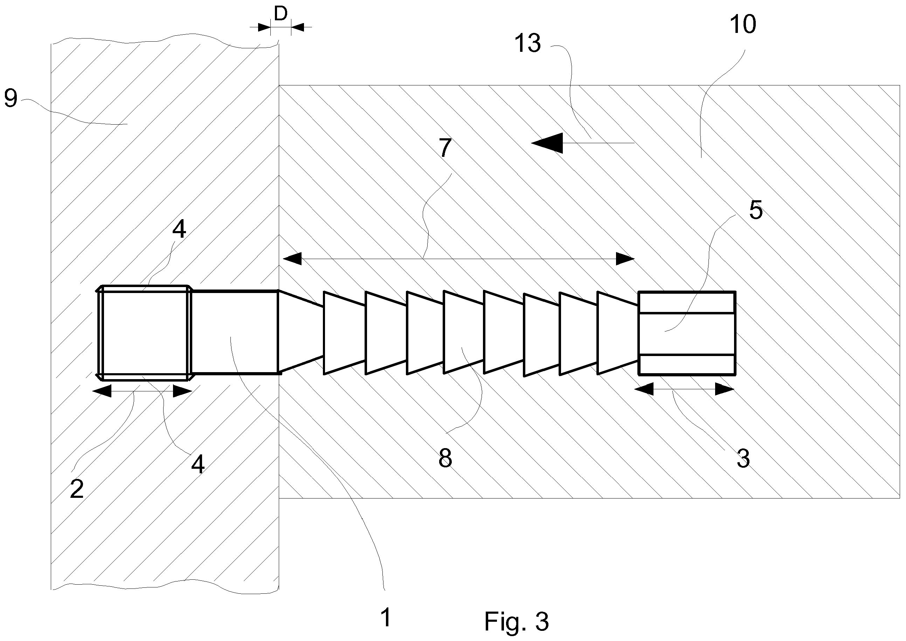

Die Fig. 3 zeigt, wiederum im Längsschnitt, ein beim erfinderischen Verfahren beschriebenes Verbindungselement 1, dessen erstes Ende 2 mit dem gewindefurchenden Teil 4 in ein erstes Bauteil 9 eingeschraubt wurde. Das zweite Ende 3 ist in einem weiteren Prozessschritt mittels einem (nicht gezeigten) Pressverfahren durch Ausüben einer Kraft in Kraftrichtung 13 mit dem zweiten Bauteil 10 fest verbunden worden, sodass zwischen den beiden Bauteilen 9,10 ein möglichst kleiner Spalt D, im Idealfall kein Spalt, entsteht. Der Rückhaltemechanismus 7 bewirkt, dass sich die konischen Rückhalteelemente 8 mit dem zweiten Bauteil 10 ähnlich der Wirkung von Widerhaken verzahnen, sodass durch die Kombination einer Verschraubung und einer Verpressung zwischen den Bauelementen 9,10 insgesamt eine verpresste und verschraubte und damit eine unlösbare Verbindung entsteht.

### Bezugszeichenliste

- 1: Verbindungselement
- 2: erstes Ende
- 3: zweites Ende
- 4: gewindefurchendes Teil
- 5: Sechskantschraubenkopf
- 7: Rückhaltemechanismus
- 8: Rückhalteelement
- 9: erstes Bauteil
- 10: zweites Bauteil
- 11: erste Bohrung
- 12: zweite Bohrung
- 13: Kraftrichtung
- D: Spalt

## Patentansprüche

1. Verfahren zum Verbinden von metallischen Bauteilen, insbesondere für Konstruktionen im Metall- oder Geländerbau, bei welchem mindestens zwei vorzugsweise aber nicht ausschliesslich aus Aluminium bestehende Bauteile (9,10) mittels mindestens einem stiftartigen Verbindungselement (1) aus Edelstahl, das am ersten Ende (2) mit einem gewindefurchenden Teil (4) versehen ist und dessen zweites Ende (3) als Sechskantschraubenkopf(5) ausgebildet ist, und zwischen dem ersten Ende (2) und dem zweiten Ende (3) mit einem Rückhaltemechanismus (7) versehen ist, ferner mit Mitteln um die Bauteile (9,10) zu führen und zusammenzupressen, **dadurch gekennzeichnet, dass** in einem ersten Schritt das erste Ende (2) des mindestens einen Verbindungselementes (1) mittels dem gewindefurchenden Teil (4) in die erste Bohrung (11) des ersten Bauteiles (9) eingeschraubt wird, und in einem zweiten Schritt das mindestens eine Verbindungselement (1) mit dem zweiten Ende (3) in die zweite Bohrung (12) des zweiten Bauteiles (10) eingesteckt und mittels Positionierungs- und Haltemitteln positioniert wird, und in einem dritten Schritt das zweite Bauteil (10) mittels des mindestens einen Verbindungselementes (1) mit dem ersten Bauteil (9) unlösbar verpresst wird.

2. Verfahren nach Anspruch 1, **dadurch gekennzeichnet, dass** das mindestens eine Verbindungselement (1) im Bereich des Rückhaltemechanismus (7) mit mehreren Rückhalteelementen (8) versehen ist, wodurch nach dem Verpressen unter Bildung eines möglichst geringen Spaltes D zwischen dem ersten Bauteil (9) und dem zweiten Bauteil (10) eine unlösbare, verpresste und verschraubte Verbindung zwischen den Bauteilen (9,10) entsteht.

3. Verfahren nach Anspruch 2, **dadurch gekennzeichnet, dass** der Rückhaltemechanismus (7) des mindestens einen Verbindungselements (1) mehrere konische, peripher umlaufende Rückhalteelemente (8) aufweist und dadurch ein Ausreissen des mindestens einen Verbindungselements (1) aus dem zweiten Bauteil (10) verhindert wird.

4. Anwendung des Verfahrens nach den Ansprüchen 1 bis 3 zur Herstellung von Konstruktionen aus Aluminium im Geländerbau
und im Metallbau.

## Claims

1. Method for connecting metallic components, in particular for structures in metal or railing construction, in which at least two components (9, 10), preferably but not exclusively consisting of aluminum, are connected by means of at least one pin-like connecting element (1) made of stainless steel, which is provided at the first end (2) with a thread-forming part (4) and the second end (3) of which is designed as a hexagonal screw head (5), and is provided between the first end (2) and the second end (3) with a retaining mechanism (7), furthermore with means for guiding and pressing the components (9, 10) together, **characterized in that** in a first step the first end (2) of the at least one connecting element (1) is screwed into the first borehole (11) of the first component (9) by means of the thread-forming part (4) and in a second step, the at least one connecting element (1) is inserted with the second end (3) into the second borehole (12) of the second component (10) and is positioned by means of positioning and holding means, and in a third step, the second component (10) is pressed non-releasably to the first component (9) by means of the at least one connecting element (1).

2. Method according to claim 1, **characterized in that** the at least one connecting element (1) is provided with a plurality of retaining elements (8) in the region of the retaining mechanism (7), as a result of which, after pressing, a non-detachable, pressed and screwed connection is produced between the components (9, 10), forming as small a gap D as possible between the first component (9) and the second component (10).

3. Method according to claim 2, **characterized in that** the retaining mechanism (7) of the at least one connecting element (1) comprises a plurality of conical, peripherally circumferential retaining elements (8), thereby preventing the at least one connecting element (1) from being torn out of the second component (10).

4. Application of the process according to claims 1 to 3 to produce constructions made of aluminum in railing construction and metal construction.

## Revendications

1. Procédé d'assemblage d'éléments de construction métalliques, en particulier pour des constructions dans le domaine de la construction métallique ou des balustrades, dans lequel au moins deux éléments de construction (9, 10), de préférence mais pas exclusivement en aluminium, sont assemblés au moyen d'au moins un élément d'assemblage (1) en forme de broche en acier inoxydable, qui est pourvu à sa première extrémité (2) d'une partie filetée (4) et dont la deuxième extrémité (3) est conçue comme une tête de vis hexagonale (5), et qui est pourvu entre la première extrémité (2) et la deuxième extrémité (3) d'un mécanisme de retenue (7), ainsi que de moyens pour guider et presser ensemble les composants (9, 10), **caractérisé en ce que**, dans une première étape, la première extrémité (2) de l'au moins un élément de liaison (1) est vissée dans le premier alésage (11) du premier composant (9) au moyen de la partie filetée (4), et dans une deuxième étape, l'au moins un élément de liaison (1) est enfiché avec la deuxième extrémité (3) dans le deuxième alésage (12) du deuxième composant (10) et est positionné à l'aide de moyens de positionnement et de maintien, et dans une troisième étape, le deuxième composant (10) est pressé de manière inamovible avec le premier composant (9) au moyen de l'au moins un élément de liaison (1).

2. Procédé selon la revendication 1, **caractérisé en ce que** l'au moins un élément de liaison (1) est pourvu de plusieurs éléments de retenue (8) dans la zone du mécanisme de retenue (7), ce qui permet d'obtenir, après le pressage, une liaison indétachable, pressée et vissée entre les éléments de construction (9, 10) en formant un interstice D aussi petit que possible entre le premier élément de construction (9) et le deuxième élément de construction (10) .

3. Procédé selon la revendication 2, **caractérisé en ce que** le mécanisme de retenue (7) de l'au moins un élément de liaison (1) comprend plusieurs éléments de retenue (8) coniques et périphériques, et **en ce que** l'on empêche ainsi l'au moins un élément de liaison (1) de s'arracher du deuxième composant (10).

4. Application du procédé selon les revendications 1 à 3 pour la fabrication de constructions en aluminium dans la construction des balustrades et dans la construction métallique.
